# EUROPÄISCHE PATENTANMELDUNG

(11) **EP 1 039 249 A2**
(43) Veröffentlichungstag der Anmeldung: **27.09.2000**
(21) Anmeldenummer: 00101684.9
(22) Anmeldetag: 03.02.2000
(51) Int. Cl.: F24H 9/12

(54) **Ventilanordnung**

(30) Priorität: 22.03.1999 DE 19912821
(71) Anmelder: KERMI GmbH, 94447 Plattling (DE)
(72) Erfinder: Fonfara, Harald, 94551, Lalling (DE)
(74) Vertreter: Schwabe - Sandmair - Marx

(57) **Zusammenfassung**

Die Erfindung betrifft eine Ventilanordnung zur Anbindung von Wärmetauschern an eine Zentral- oder Ferawärmeheizung, wobei erfindungsgemäß ein Thermostatventil zwischen dem Vorlaufanschluß der Heizungsanlage und dem Heizkörper- sowie dem Fußbodenheizungs-Vorlaufanschluß angeordnet ist, und wobei ein Rücklaufbegrenzerventil am Heizkörperrücklauf angeordnet ist, um den Leitungswiderstand des Heizkörpers zu verändern bzw. zu erhöhen.

## Beschreibung

Die Erfindung betrifft eine Ventilanordnung zur Anbindung von Wärmetauschern, bevorzugt Heizkörpern, Fußbodenheizungen oder dergleichen, an eine Zentral- oder Fernwärmeheizung gemäß dem Oberbegriff des Patentanspruchs 1.

Eine Ventilanordnung der gattungsgemäßen Art weist einen Vor- und einen Rücklaufanschluß zur Zentral- oder Fernwärmeheizung auf, die über Verbindungsleitungen an einen Heizkörper-Vorlaufanschluß sowie einen Heizkörper-Rücklaufanschluß angebunden sind, und über entsprechende Verbindungsleitungen an einen Fußbodenheizungs-Vorlaufanschluß sowie einen Fußbodenheizungs-Rücklaufanschluß angesetzt sind. Wenigstens eine Ventil- bzw. Thermostatventileinrichtung zur Steuerung des Durchflusses eines Heizmediums ist ebenfalls vorgesehen. Eine derartige Ventilanordnung ist beispielsweise aus der DE 196 44 773 A1 bekannt.

Im Stand der Technik hat es weitere Bemühungen gegeben, Ventilanordnungen zu schaffen, die konzipiert sind, um Montagearbeiten, das heißt insbesondere Installateurtätigkeiten, zu vereinfachen, um Baukosten kalkulierbarer und überschaubarer zu machen. In diesem Zusammenhang wurde z.B. in der DE 196 50 892 A1 vorgeschlagen, für eine Fußbodenheizung einen Anschlußkasten zur Verfügung zu stellen, der konzipiert ist, um die Fußbodenheizung in einen Kreislauf einer Radiatorheizanlage einzubinden.

Ein entsprechender Weg ist in der DE 297 15 784 U1 aufgegriffen worden, wo eine Ventilgruppe für eine Fußbodenheizung vorgeschlagen wird, wobei im Prinzip ein Thermostatventil zur Regelung des Zulaufes bzw. des Abflusses zu bzw. von einer Fußbodenheizung zu steuern ist, ohne daß hierzu weitere installatorische Maßnahmen erforderlich wären als der Anschluß der Fußbodenheizung und der Anschluß der Zentralheizungsanlage.

Die DE 296 11 577 U1 offenbart ebenfalls eine Anschlußvorrichtung für eine Fußbodenheizung, wobei wiederum ein in eine Wandung eines Gebäudes einbaubarer Anschlußkasten mit darin aufgenommenen üblichen Elementen für die Heizungsinstallation die zentrale Rolle spielt.

Der obige Stand der Technik hat zum Nachteil, daß nach wie vor keine Lösung vorhanden ist, um eine Kombination einer Fußbodenheizung und eines Heizkörpers mit einer einzigen Ventilanordnung anzuschließen, so daß zum einen sämtliche Anforderungen dieser Kombination von Wärmetauschern abgedeckt sind und andererseits eine einfach Montage ermöglicht werden kann.

Dementsprechend ist es die Aufgabe der vorliegenden Erfindung, den Nachteilen des oben aufgezeigten Standes der Technik soweit als möglich Abhilfe zu verschaffen. Insbesondere soll eine Ventilanordnung geschaffen werden, die einfach zu einem monolithischen Block zusammengefaßt werden kann.

Die der vorliegenden Erfindung zugrundeliegende Aufgabe wird durch eine Ventilanordnung mit den Merkmalen im Patentanspruch 1 weitgehend gelöst.

Zweckmäßige Ausführungsformen der erfindungsgemäßen Ventilanordnung gehen aus den Unteransprüchen hervor.

Die gemäß der Erfindung erzielbaren Vorteile beruhen auf einer Ventilanordnung gemäß dem Oberbegriff des Patentanspruchs 1, wobei ein Thermostatventil zwischen dem Vorlaufanschluß und dem Heizkörper- sowie dem Fußbodenheizungs-Vorlaufanschluß angeordnet ist und wobei ein Rücklaufbegrenzerventil bzw. eine Absperrung für den Heizkörper, das bzw. die am Heizkörperrücklauf angeordnet ist, um den Leitungswiderstand des Heizkörpers zu verändern bzw. zu erhöhen, vorgesehen ist.

Diese gemäß der Erfindung ausgebildete Ventilanordnung ermöglicht es, gleichzeitig einen herkömmlichen Heizkörper und eine herkömmliche Fußbodenheizung an einen Anschlußblock, das heißt an die erfindungsgemäße Ventilanordnung anzuschließen und eine thermostatische Steuerung für beide Wärmetauscher vorzunehmen, wobei über das Rücklaufbegrenzerventil eine Einstellung der Durchflußmengen an Heizmedium, bevorzugt Wasser, für den Heizkörper und die Fußbodenheizung einstellbar ist. Das heißt, gemäß der Erfindung werden ein normaler Heizkörper und eine Fußbodenheizung parallel angeströmt, thermostatisch gesteuert und über ihren Rücklauf werden ihre Leitungswiderstandscharakteristiken berücksichtigt, so daß beispielsweise für eine Aufheizung eines Raumes eine Betonung der Wärmeabgabe auf die Fußbodenheizung gelegt werden kann. Eine ebenfalls erfindungsgemäße Merkmalskombination ergibt sich, wenn alternativ bzw. zusätzlich zu dem Rücklaufbegrenzerventil, das am Heizkörperrücklauf angeordnet ist, in den Rücklauf der Fußbodenheizung ein bevorzugt temperaturgeregeltes Rücklaufbegrenzerventil eingesetzt ist. Dieses steuert den Rückfluß an Heizmedium durch die Fußbodenheizung aufgrund der Temperatur des Heizmediums an dem Rücklauf der Fußbodenheizung. Auf diese Weise kann eine effiziente Abkühlung des Heizmediums innerhalb der Fußbodenheizung bewerkstelligt werden, so daß es vermieden werden kann, daß das Heizmedium zu schnell durch die Fußbodenheizung hindurchfließt, ohne ausreichend genutzt worden zu sein.

Eine bevorzugte Ausführungsform gemäß der Erfindung sieht vor, daß die Ventilanordnung auch ein Umschaltventil zwischen dem Thermostatventil und einem Leitungsabschnitt aufweist, bei dem sich die Verbindungsleitung vom Vorlaufanschluß zu dem Fußbodenheizungs-Vorlaufanschluß und dem Heizkörper-Vorlaufanschluß verzweigt, so daß sich der Fußbodenheizungsvorlauf oder der Heizkörpervorlauf wahlweise umgehen lassen.

Bevorzugt ist das Umschaltventil jedoch so angeordnet, daß die Fußbodenheizung in einen Dauerbetrieb überführt werden kann, wobei lediglich der Heizkörper als thermostatisch regelbarer Wärmetauscher an der Ventilanordnung verbleibt. Das heißt, ausgehend von dem Zentralheizungsvorlauf bzw. dem Fernwärmeheizungsvorlauf ist ein verschließbarer Verbindungsleitungsabschnitt vorgesehen, über den der Fußbodenheizungsvorlauf direkt angeströmt werden kann, ohne daß das Thermostatventil Einfluß auf die Zuleitung nehmen kann. Prinzipiell wäre es auch möglich, an die Stelle des Umschaltventils ein weiteres Thermostatventil zu setzen, dessen Ansprechtemperatur wesentlich niedriger eingestellt ist, als die des Thermostatventils der Gesamtventilanordnung gemäß der Erfindung, so daß die Fußbodenheizung immer auf einer merklichen Grundtemperatur gehalten werden kann, von der aus die große Masse des Fußbodens vergleichsweise schnell aufgeheizt werden kann.

Fußbodenheizungsaufbauten sind temperaturanfällig und können ab einer Temperatur von ca. 70°C leicht beschädigt werden. Deshalb weist die Ventilanordnung mit Merkmalen gemäß der Erfindung vorteilhafterweise am Fußbodenheizungsvorlauf einen Verbindungsheizungsabschnitt auf, der ein auf eine Aktivierungstemperatur einstellbares Sicherheitsbegrenzungsventil umfaßt. Wird die Temperatur des Heizmediums, das vom Vorlauf der Heizungsanlage kommt, zu heiß, beispielsweise heißer als 70°C, so schließt das Sicherheitsbegrenzungsventil und koppelt die ansonsten gefährdete Fußbodenheizung ab. Diese Maßnahme ist besonders deshalb wesentlich, weil gerade bei modernen Zentralheizungsanlagen die vorprogrammierte Möglichkeit besteht, daß die Vorlauftemperatur des Heizmediums gewollt auf ansonsten nicht einstellbare Werte erhöht wird, um beispielsweise nach einer längeren Zeit, wenn das Gebäude abgekühlt ist, eine schnelle Aufheizung durchführen zu können.

Besonders vorteilhaft läßt sich die Ventilanordnung gemäß der Erfindung realisieren, wenn die Verbindungsleitungen der Ventilanordnung bevorzugt in Verbindung mit den erforderlichen Ventilgehäusen usw. in einem Block zusammengefaßt sind. Ein solcher Block läßt sich beispielsweise durch Gußtechniken, Spritzgußtechniken, Blastechniken oder dergleichen herstellen. Um eine einfachere Montage gewährleisten zu können, kann der Block eine Trennebene aufweisen, die sich in einer durch wenigstens einige der Verbindungsleitungen aufgespannten Ebene erstreckt. Natürlich kann der Block auch vollkommen monolithisch, das heißt einstückig, mit einer entsprechenden Spritzgußmatrize hergestellt werden.

Vorteilhafterweise sind die Anschlüsse an dem Block aus Metall, insbesondere Messing, Rotguß oder dergleichen, wobei entsprechende Anschlußabschnitte an den monolithischen Block angespritzt bzw. in dessen Material eingegossen werden können. Ist der Block zweiteilig, so läuft die Trennlinie im Bereich der Anschlußabschnitte aus der Trennebene heraus, so daß sich im Bereich der Anschlußabschnitte geschlossene Leitungsquerschnitte ergeben. Auf diese Weise können Abschnitte, die durch mechanische Belastungen zerstört werden könnten, wenn die Leitungen von und zu der Heizungsanlage bzw. von und zu dem Wärmetauscher angeschlossen werden, stabiler ausgebildet sein als beispielsweise der Block, der aus Kunststoff mit einer Spritzgußtechnik hergestellt wird, und der lediglich dicht sein muß und einem kurzzeitig erhöhten Druck beim Abdrücken einer Heizungsanlage, das heißt, bei der Dichtigkeitsprüfung, widerstehen können muß.

Die bevorzugte Ausführungsform bietet als Block eine einfache und schnelle Möglichkeit der Montage, ohne daß eine große Anzahl von einzelnen Bestandteilen erforderlich wäre. Außerdem lassen sich mit der erfindungsgemäßen Ventilanordnung sämtliche Fußbodenheizungs- und Heizkörpertypen anschließen und aufeinander abstimmen, so daß der Heizungsinstallateur bzw. der Endverbraucher keine komplizierten Überlegungen anstellen muß, um einen kombinierten Anschluß von verschiedenen Wärmetauschern zusammenzustellen.

Vorteilhafterweise kann die erfindungsgemäße Ventilanordnung bzw. der Ventilblock nicht nur mit seitlich angesetzten Vorlauf- und Rücklaufanschlüssen für einen Heizkörper versehen sein, sondern es können alternativ oder zusätzlich Anschlüsse vorgesehen sein, beispielsweise um einen mittig anschließbaren Heizkörper an die erfindungsgemäße Anordnung anzuschließen.

Nachfolgend wird die vorliegende Erfindung unter Bezugnahme auf bevorzugte Ausführungsformen im einzelnen beschrieben. Dabei werden weitere Merkmale, Vorzüge und Zielsetzungen gemäß der Erfindung offenbart. In den Darstellungen zeigen:
- Fig. 1: eine teilweise geschnittene Prinzipansicht einer bevorzugten Ausführungsform mit Merkmalen gemäß der Erfindung;
- Fig. 2: die Ausführungsform gemäß Fig. 1 in einer teilweise senkrecht zu der Schnittebene gemäß Fig. 1 geschnittenen Ebene;
- Fig. 3: eine Anschlußweise mit einem Anschlußschema, das von dem gemäß der Erfindung abweicht, in einer Prinzipdarstellung;
- Fig. 4: ein weiteres abweichendes Anschlußschema für Wärmetauscher in einer Prinzipdarstellung;
- Fig. 5: eine wiederum anderes konzipierte Anschlußweise für Wärmetauscher in einer Prinzipdarstellung; und
- Fig. 6: eine abermals abweichende Anschlußweise für Wärmetauscher in einer weiteren Prinzipdarstellung.

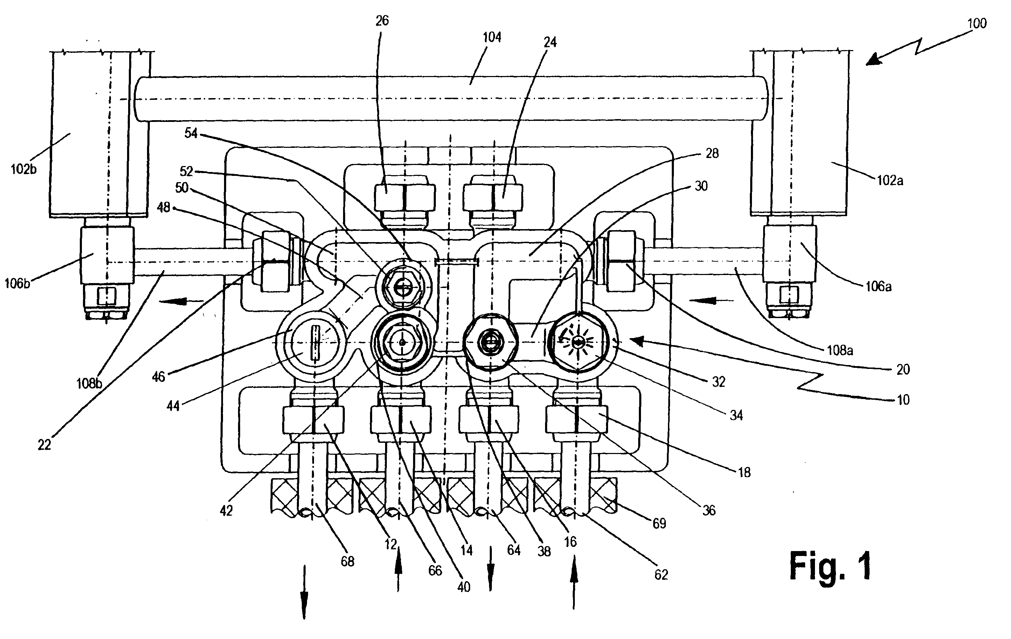

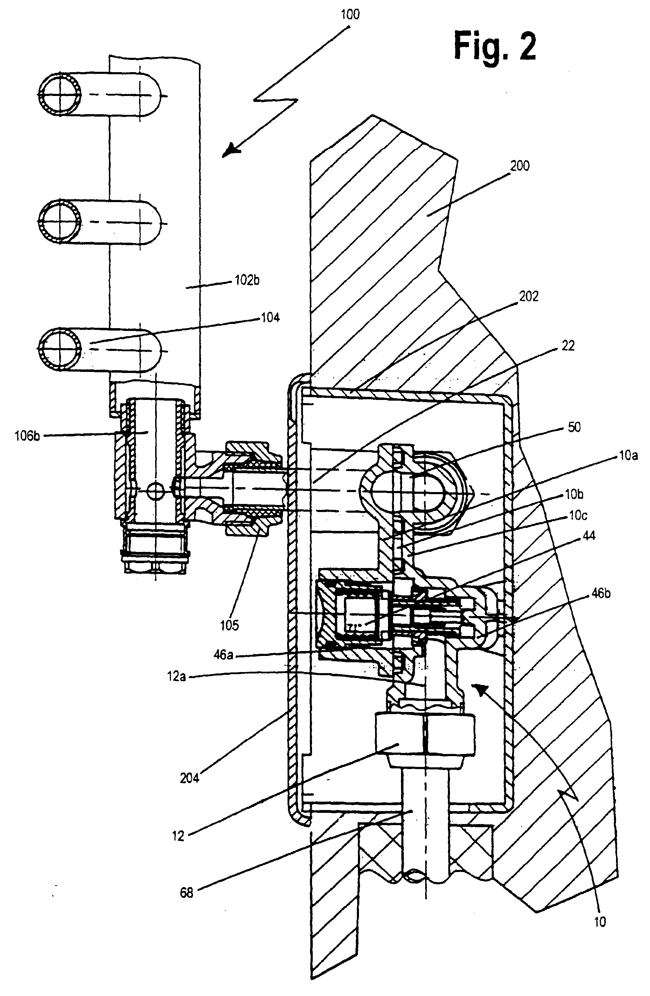

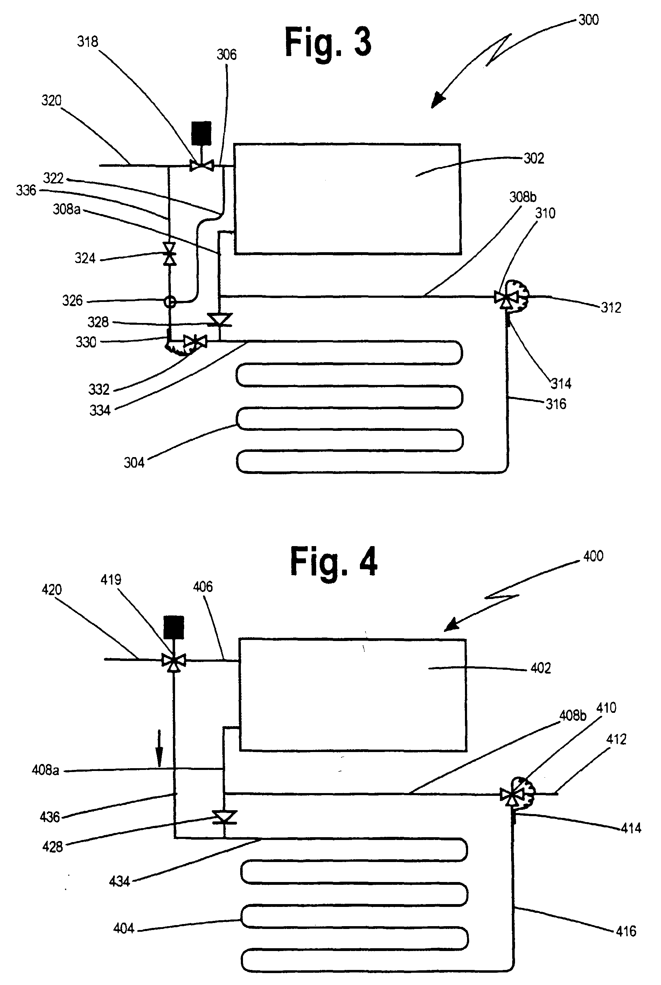

Allgemein ist zu bemerken, daß die Fig. 1 und 2 einer Ausführungsform entsprechen, die auch in den beigefügten Parentansprüchen beansprucht worden ist, während die Fig. 3 bis 6 Ausführungsformen betreffen, die in den Patentansprüchen noch keinen Niederschlag gefunden haben, jedoch von erfinderischer Qualität sind und zum Gegenstand von Patentansprüchen gemacht werden können.

In den Fig. 1 und 2 sind einander entsprechende Bestandteile durch gleiche Bezugszeichen gekennzeichnet. In den Fig. 3 bis 6 sind einander entsprechende oder wenigstens funktionsgleiche Bestandteile durch entsprechende Bezugszeichen benannt (308b entspricht 408b entspricht 508b entspricht 608b).

Die bevorzugte Ausführungsform einer Ventilanordnung 10 gemäß der Erfindung ist an einen Heizkörper 100 angeschlossen, der zwei senkrecht erstreckte Sammelrohre 102a, 102b aufweist, zwischen denen sich mehrere Heizrohre 104 befinden. Der Heizkörper 100 ist über von unten in die Sammelrohre 102a, 102b eingeschraubte Anschlußarmaturen 106a, 106b und über Verbindungsleitungen 108a, 108b an Anschlüsse 20, 22 der Ventilanordnung 10 angeschlossen.

Wie aus der Fig. 2 zu erkennen ist, ist die Ventilanordnung 10 zweiteilig ausgebildet. Ein vorderer Abschnitt 10a ist über eine Trennebene 10b von dem hinteren Abschnitt 10c des Blockes der Ventilanordnung 10 getrennt. Über Schrauben, Bolzen, eine Klebeverbindung oder dergleichen lassen sich die Bestandteile 10a, 10c dicht miteinander verbinden.

Anschlüsse 12, 14, 16, 18, 20, 22 sind vorgesehen, um Wärmetauscher und die Heizanlage mit ihren jeweiligen Vor- und Rückläufen an die Ventilanordnung 10 anzuschließen. Diese Anschlußabschnitte 12 bis 22 können beispielsweise aus Messing ausgebildet sein und in den Block der Ventilanordnung eingespritzt oder eingeschraubt sein. Dabei sind die Anschlußabschnitte aus Metall, während der Block aus einem beliebigen, hinreichend festen Material ausgebildet sein kann, beispielsweise Kunststoff.

Angemerkt sei, daß die dargestellten Bestandteile natürlich auch beispielsweise werksseitig vorgefertigt aus einzelnen Bestandteilen zusammengeschraubt, zusammengenippelt oder dergleichen sein können, während es jedoch zu bevorzugen sein dürfte, die gesamte Ventilanordnung wenigstens einschließlich ihrer Verbindungsleitungen und ihrer Ventilgehäuse bzw. Ventilaufnahmeabschnitte ein- oder zweistückig mittels einer Guß- oder Spritzgußtechnik herzustellen.

Die Ventilanordnung 10 ist an einen Vorlauf 66 einer Heizungsanlage angeschlossen. Ein abgekühltes Heizmedium, das über den Vorlauf 66 zugeführt worden ist, wird über einen Rücklauf 64 zu der Heizungsanlage zurückgeführt. Eine Leitung 68 bezeichnet einen Vorlauf zu einer Fußbodenheizung (nicht dargestellt) und eine Leitung 62 bezeichnet einen Rücklauf von dieser Fußbodenheizung. Die Leitungen 62, 64, 66, 68 sind jeweils von Isoliermänteln 60 umgeben.

Während der Heizkörper 100 über die seitlich von der Ventilanordnung 10 abgehenden Anschlüsse 22, 20 angeschlossen ist, sind weitere Anschlüsse 24, 26 vorgesehen, über die beispielsweise ein mittig anzuschließender Heizkörper an die Ventilanordnung angebunden werden kann. Wahlweise können die Anschlüsse 20, 22 oder 24, 26 zum Einsatz kommen, wobei die jeweils nicht benötigten Anschlüsse blind geflanscht sein können.

Die Ventilanordnung 10 weist ausgehend von dem Vorlaufanschluß 14 von der Heizungsanlage einen Leitungsabschnitt auf, in den ein Thermostatventil 42 integriert ist. Das Thermostatventil 42 ist in einer Ventilaufnahme 40 bzw. in einem Ventilgehäuse 40, das bevorzugt ein- oder zweistückig in den Block der Ventilanordnung 10 eingeformt ist.

Parallel zu dem dem Thermostatventil zugeordneten Leitungsabschnitt verläuft ein weiterer Leitungsabschnitt zu einem Umschaltventil 52, das ebenfalls in einem Gehäuse bzw. in einer Aufnahme 54 vorgesehen ist. Ist das Sperrventil 54 geschlossen, wird die Fußbodenheizung (nicht dargestellt) thermostatisch gesteuert von dem Heizmedium angeströmt. Ist das Sperrventil 52 geöffnet, kann das Heizmedium das Thermostatventil 42 umgehen und die Fußbodenheizung wird statisch von dem Heizmedium angeströmt.

Ein Verbindungsleitungsabschnitt 48 schließt an den Leitungsabschnitt mit dem Thermostatventil 42 und dem Sperrventil 52 an und leitet das Heizmedium zu einem Sicherheitsbegrenzungsventil 44, das in einer Ventilaufnahme 46 dichtend gehalten ist. Das Sicherheitsbegrenzungsventil dient dazu, die Fußbodenheizung vor Heizmedium mit zu hoher Temperatur zu schützen.

Ausgehend von dem Sicherheitsbegrenzungsventil 44 fließt das Heizmedium nun in die Fußbodenheizung über den Anschluß 12 und die Vorlaufverbindungsleitung 68.

Ausgehend von dem Verbindungsleitungsabschnitt mit dem Thermostatventil 42 wird das Heizmedium in einen Verbindungsleitungsabschnitt 50 geleitet, der an dem Vorlaufanschluß 22 zu dem Heizkörper 100 endet. Das Heizmedium durchfließt nun thermostatisch geregelt den Heizkörper 100 und wird ausgehend von dem Heizkörperrücklauf 108a in den Heizkörperrücklaufanschluß 20 der Ventilanordnung 10 eingeleitet. Ausgehend von Heizkörperrücklaufanschluß wird das Heizmedium über einen Leitungsabschnitt 28 zu einem Einstell- bzw. Absperrventil 36 für den Heizkörper geführt, über den der Heizkörper einerseits abgesperrt, die Durchflußmenge durch den Heizkörper 100 fest eingestellt werden kann, um den Leitungswiderstand des Heizkörpers 100 so variieren zu können, daß er dem Leitungswiderstand der Fußbodenheizung entspricht, so daß das Heizmedium nicht nur durch den Wärmetauscher fließt, der den geringeren Leitungswiderstand hat.

An dem Rücklaufanschluß 18 von der Fußbodenheizung ist ein Rücklaufbegrenzerventil 34 innerhalb einer Aufnahme 32 vorgesehen, das das Heizmedium in seinem Durchsatz anhand seiner Temperatur regelt. Ist die Rücklauftemperatur zu hoch, wird das Rücklaufbegrenzerventil 34 weiter geschlossen, damit das Heizmedium innerhalb der Fußbodenheizung effizienter genutzt wird und die Rücklauftemperatur des Heizmediums zu der Heizungsanlage verringert werden kann. Ist die Rücklauftemperatur bei dem Rücklaufbegrenzerventil 34 zu niedrig, wird dieses weiter aufmachen, um die Effektivität der Fußbodenheizung nicht zu mindern.

Ausgehend von dem Rücklaufbegrenzerventil 34 fließt das abgekühlte Heizmedium über einen Verbindungsleitungsabschnitt 30 zu dem Rücklaufanschluß 16 zu der Heizungsanlage.

Gemäß Fig. 2 ist die Ventilanordnung 10 in einem Anschlußkasten 202 aufgenommen, der über einen Deckel 204 verschlossen ist. Der Anschlußkasten 202 ist in eine Mauerausnehmung einer Mauer 200 eingesetzt. Der Deckel 204 weist Öffnungen auf, über die erforderliche Heizkörperanschlüsse für den Heizkörper 100 herausgeführt werden können. Ein Heizkörper-Vorlaufanschlußabschnitt 105 ist bereits außerhalb des Anschlußkastens 202, 204 vor dem Deckel 204 angeordnet.

Die Ventilaufnahme 46 gemäß Fig. 1 ist, wie aus Fig. 2 ersichtlich, mit einem Abschnitt 46a in dem Abschnitt 10a des Blockes der Ventilanordnung 10 eingeformt, während der Abschnitt 46b in den anderen Abschnitt 10c jenseits der Trennebene 10b des Blockes der Ventilanordnung 10 eingeformt ist.

Ausgehend von dem Fußbodenheizungs-Vorlaufanschluß 12 erstreckt sich ein Leitungsabschnitt 12a zu dem Sicherheitsbegrenzungsventil 44, das die Fußbodenheizung vor dem Fall der Zufuhr eines zu heißen Heizmediums bewahrt.

Die Fig. 3 zeigt eine Anordnung 300 von Wärmetauschern mit einer zugehörigen Anschlußanordnung bzw. Ventilanordnung.

Ein Heizkörper 302 und eine Fußbodenheizung 304 sind an ein zentrales Heizungssystem anzuschließen, zu dem die Leitungsabschnitte 320, 312 als Vorlauf 320 und Rücklauf 312 gehören.

Sinn und Zweck der Anordnung gemäß Fig. 3 und auch der Anordnungen gemäß den Fig. 4 bis 6 ist es, eine Fußbodenheizung in der Regel mit dem Heizmedium von dem Rücklauf eines Heizkörpers zu speisen und die Zufuhr lediglich dadurch zu ergänzen, daß in dem Fall, daß das Heizmedium von dem Rücklauf des Heizkörpers her eine zu geringe Temperatur hat, Heizmedium von dem Vorlauf 320 zugemischt wird bzw. in bestimmten Fällen ausschließlich über den Vorlauf 320 erfolgt, wenn vom Heizkörper 302 lediglich kaltes Heizmedium zu der Fußbodenheizung 304 geleitet würde. Diese Grundüberlegung gilt im Prinzip für sämtliche Ausführungsformen nach den Fig. 3 bis 6.

Die Anordnung 300 gemäß Fig. 3 weist am Vorlauf 320 ein Thermostatventil 318 auf, über das dem Heizkörper 302 das Heizmedium zugeführt wird. Der Heizkörpervorlauf 306 übernimmt das Heizmedium von dem Vorlauf 320 von der Heizungsanlage, leitet das Heizmedium in den Heizkörper 302, von wo aus es über den Heizkörperrücklauf 308a abgeleitet wird. Der Heizkörperrücklauf 308a verzweigt sich und schließt auf der einen Seite über ein Rückschlagventil 328 an die Fußbodenheizung 304 an. Von dem Rückschlagventil 328 aus fließt das Heizmedium in den Vorlauf 334 der Fußbodenheizung 304. Ein anderer Zweig 308b des Heizkörperrücklaufes 308a schließt an ein Dreiwegeventil 310 an. Das Dreiwegeventil dient dazu, den Durchsatz an Heizmedium durch die Fußbodenheizung 304 aufgrund der Temperatur am Rücklauf 316 der Fußbodenheizung zu steuern. Über einen Temperatursensor 314 am Rücklauf 316 der Fußbodenheizung 304 wird die Rücklauftemperatur des Heizmediums erfaßt und dementsprechend kann das Heizmedium insgesamt durch die Fußbodenheizung 304 fließen oder ein Teil kann über den Leitungszweig 308b abgeleitet werden. Im Extremfall kann auch das gesamte Heizmedium von dem Heizkörper 302 unmittelbar über den Leitungszweig 308b und das Dreiwegeventil 310 in den Rücklauf 312 zur Heizungsanlage überführt werden.

Über einen Leitungskurzschluß 322 kann Heizmedium thermostatisch geregelt über eine Leitungsabzweigung 326 in die Fußbodenheizung 304 eingeleitet werden. Ein Ventil 332 kann gesteuert aufgrund der gemessenen Temperatur, die von einem Temperatursensor 330 gemessen wird, den Zustrom an Heizmedium zu der Fußbodenheizung 304 steuern bzw. unterbinden, falls die Temperatur des Heizmedium zu groß wird, so daß der Aufbau der Fußbodenheizung 304 im Extremfall geschädigt werden könnte. Ein Drosselventil 324 in einem Leitungsabschnitt 336, über den die Fußbodenheizung unmittelbar an den Vorlauf 320 von der Heizungsanlage angeschlossen werden kann, sorgt dafür, daß, beispielsweise in dem Fall, daß das Ventil 332 geschlossen ist, kein Rückstrom zum Vorlauf aufgrund der Leitungswiderstandsverhältnisse im System erfolgen kann. Entsprechendes gilt für den Fall, daß vom Heizkörperrücklauf 308a über das Rückschlagventil 328 ein Heizmedium eingeleitet wird, das eventuell den Weg mit dem niedrigeren Leitungswiderstand aufgreifen könnten, der dann nicht durch die Fußbodenheizung 304 verlaufen würde, sondern eventuell zum Vorlauf 320 hin.

Im Normalfall wird das Heizmedium von dem Vorlauf 320 geregelt über das Thermostatventil in den Heizkörper 302 einströmen, dort unter Abgabe einer gewünschten Heizleistung abkühlen und anschließend über den Heizkörperrücklauf 308a weiterfließen, um, in dem Fall, daß das Dreiwegeventil 310 keinen Fluß eines Heizmediums über den Zweig 308b zuläßt, über das Rückschlagventil 328 in den Vorlauf 334 der Fußbodenheizung 304 zu gelangen, von wo aus das Heizmedium dann über den Rücklauf 316 der Fußbodenheizung zu dem Rücklauf 312 der Gesamtanordnung 300 fließt.

Mißt der Sensor 314 eine zu hohe Temperatur des Heizmediums am Rücklauf 316 der Fußbodenheizung, so wird eine Bypaßströmung über den Zweig 308b zugelassen, wodurch das Heizmedium innerhalb der Fußbodenheizung 304 weiter abkühlen kann. Ist das Heizmedium, das von dem Heizkörper 302 zu der Fußbodenheizung 304 strömt, zu kalt, so kann wärmeres Heizmedium unmittelbar über die Zuleitungen 336 und/oder 322 gesteuert über das Ventil 332 in die Fußbodenheizung 304 gelangen.

Bei der Ausführungsform gemäß Fig. 4 ist eine Abwandlung zu der Ausführungsform gemäß Fig. 3 insofern geschaffen, als ein thermostatisch geregeltes Dreiwegeventil 419 in dem Vorlauf 420 angeordnet ist, und sich ausgehend von diesem Dreiwegeventil 419 der Heizkörpervorlauf und der Fußbodenheizungsvorlauf 436 erstrecken. Im Normalfall wird das Thermostatventil das Heizmedium zunächst in den Heizkörper 402 einleiten, von dem aus das Heizmedium über den Heizkörperrücklauf 408a und das Rückschlagventil 428 in den Vorlauf 434 der Fußbodenheizung 404 einströmt. Macht das thermostatisch gesteuerte Dreiwegeventil 419 weiter auf, so kann Heizmedium auch unmittelbar über den Leitungsabschnitt 436 in die Fußbodenheizung 404 einströmen. Gleiches ist möglich, wenn das Dreiwegeventil 419 absichtlich so eingestellt wird, daß der Heizkörper 402 aus dem Kreislauf ausgeschlossen wird. Insbesondere für diesen Fall ist es zweckmäßig, wenn innerhalb des Verlaufes des Leitungsabschnittes 436 bzw. 434 ein Ventil als Sicherheitsbegrenzer vorgesehen ist, etwa so, wie diese Funktion das Ventil 332, 330 gemäß Fig. 3 erfüllt, um zu verhindern, daß bei teilweise geöffnetem Dreiwegeventil 410 sogleich das Heizmedium den Weg des geringsten Widerstandes aufnimmt, der dann über den Leitungszweig 408b und nicht über die Fußbodenheizung 404 verlaufen würde.

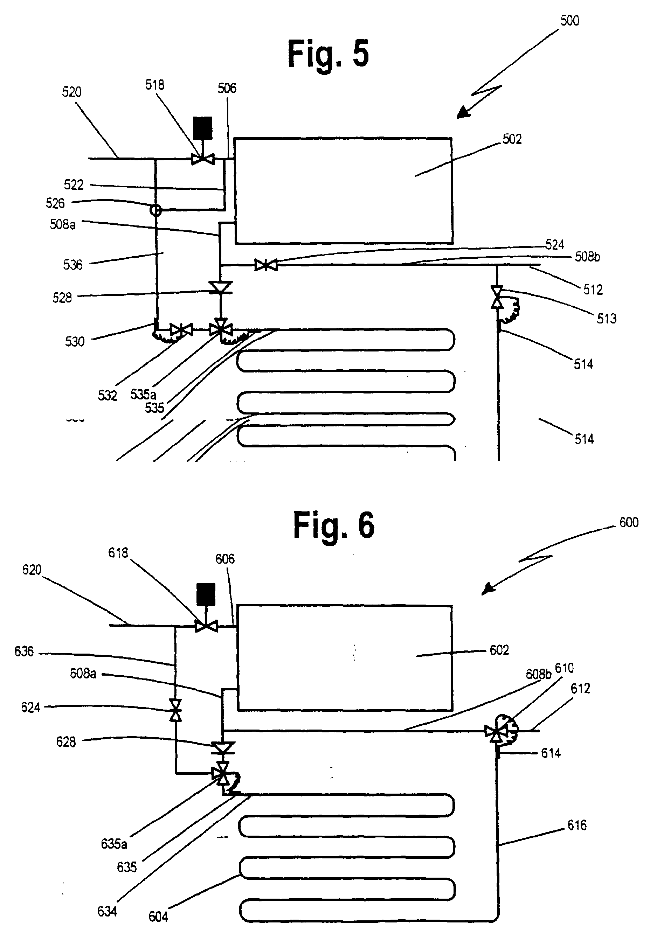

Bei der Ausführungsform gemäß Fig. 5 wird im Normalbetrieb ebenfalls zunächst der Heizkörper 502 von dem Heizmedium angeströmt. Anschließend läuft das Heizmedium über das Rückschlagventil 528 und ein Dreiwegeventil 535a mit einem Temperatursteuersensor 535 am Vorlauf 534 der Fußbodenheizung 504 in diese. Falls das Ventil 535a schließt, kann das Heizmedium von dem Heizkörper 502 über die Drossel 524 in den Rücklauf 512 zu der Heizungsanlage zurückfließen.

Ein über einen Temperatursensor 514 gesteuertes Ventil 513 kann den Durchsatz an Heizmedium durch die Fußbodenheizung 504 ebenfalls regeln.

Für den Fall, daß das Heizmedium, das aus dem Rücklauf 508a des Heizkörpers 502 zu der Fußbodenheizung 504 strömt, zu kalt ist, kann das Dreiwegeventil 535a zusätzlich heißeres Heizmedium von dem Vorlauf 520 von der Heizungsanlage beimischen. Um eine Überhitzung der Fußbodenheizung 504 vermeiden zu können, kann in dem Vorlaufabschnitt 536, der ebenfalls in den Vorlauf 534 der Fußbodenheizung 504 mündet, ein Sicherheitsbegrenzungsventil 532 vorgesehen sein, das auf die von einem Temperatursensor 530 gemessene Temperatur anspricht.

Die Ausführungsform gemäß Fig. 6 ist prinzipiell eine Kombination der Ausführungsformen gemäß den Fig. 5 (ohne das Ventil 530, 532) und Fig. 3. Abweichend ist lediglich kein Äquivalent für die Leitung 322 bzw. die Leitung 522 vorgesehen, jedoch kann, wenn der Heizkörper 602 nicht in den Kreislauf eingebunden ist, das Heizmedium unmittelbar über die Leitung 636 und die Drossel 624 sowie das entsprechend eingestellte Dreiwegeventil 635a, 635 in die Fußbodenheizung 604 einströmen.

## Patentansprüche

1. Ventilanordnung zur Anbindung von Wärmetauschern an eine Zentral- oder Fernwärmeheizung, mit den folgenden Merkmalen:
- mit einem Vor- und einem Rücklaufanschluß zur Zentral- oder Fernwärmeheizung;
- mit einem Heizkörpervor- und -rücklaufanschluß;
- mit einem Fußbodenheizungsvor- und -rücklaufanschluß;
- mit wenigstens einer Ventil- bzw. Thermostatventileinrichtung zur Steuerung des Durchflusses eines Heizmediums;
- mit Verbindungsleitungen zwischen den vor- und rücklaufseitigen Anschlüssen;
**gekennzeichnet** durch die folgenden Merkmale:
a) einem Thermostatventil (42), das zwischen dem Vorlaufanschluß (14) und dem Heizkörper- sowie dem Fußbodenheizungs-Vorlaufanschluß angeordnet ist;
b) einem Rücklaufbegrenzerventil bzw. Absperrventil (36), das im Heizkörperrücklauf (28) angeordnet ist, um den Leitungswiderstand des Heizkörpers (100) zu verändern bzw. zu erhöhen.

2. Ventilanordnung nach Anspruch 1, dadurch **gekennzeichnet,** daß am Rücklauf (18) der Fußbodenheizung ein Rücklaufbegrenzerventil (34), das insbesondere temperaturgeregelt ist, vorgesehen ist, das den Durchfluß an Heizmedium durch die Fußbodenheizung aufgrund von deren Temperatur steuert.

3. Ventilanordnung nach einem der Ansprüche 1 oder 2, dadurch **gekennzeichnet,** daß ein paralleler Verbindungsleitungsabschnitt mit einem Umschaltventil (54) parallel zu einem Leitungsabschnitt mit dem Thermostatventil (42) vorgesehen ist.

4. Ventilanordnung nach einem der Ansprüche 1 bis 3, dadurch **gekennzeichnet,** daß ein Umschaltventil zwischen dem Thermostatventil (42) und dem Leitungsabschnitt vorgesehen ist, bei dem sich die Verbindungsleitung vom Vorlaufanschluß zu dem Fußbodenheizungs- und dem Heizkörper-Vorlaufanschluß verzweigt, so daß der Fußbodenheizungsvorlauf oder der Heizkörpervorlauf absperrbar ist.

5. Ventilanordnung nach einem der Ansprüche 1 bis 4, dadurch **gekennzeichnet,** daß vor dem Fußbodenheizungsvorlauf (12) in einem Verbindungsleitungsabschnitt ein auf eine Aktivierungstemperatur einstellbares Sicherheitsbegrenzungsventil (44) vorgesehen ist.

6. Ventilanordnung nach einem der Ansprüche 1 bis 5, dadurch **gekennzeichnet,** daß die Verbindungsleitungen in einem Block zusammengefaßt sind.

7. Ventilanordnung nach Anspruch 6, dadurch **gekennzeichnet,** daß der Block (10) eine Trennebene (10b) aufweist, die sich in einer durch wenigstens einige der Verbindungsleitungen aufgespannten Ebene erstreckt.

8. Ventilanordnung nach den Ansprüchen 6 bzw. 7, dadurch **gekennzeichnet,** daß an den Anschlüssen am Block Anschlußabschnitte (12 bis 26) aus Metall, insbesondere Messing, Rotgruß oder dergleichen, vorgesehen sind.

9. Ventilanordnung nach einem der Ansprüche 6 bis 8, dadurch **gekennzeichnet,** daß der Block ein zweigeteiltes Gußstück (10a, 10c) ist, bei dem die Anschlußaßschnitte angegossen, angespritzt oder dergleichen angebracht sind.

10. Ventilanordnung nach einem der Ansprüche 1 bis 9, dadurch **gekennzeichnet,** daß der Heizkörper-Vorlaufanschluß (22) und der Heizkörper-Rücklaufanschluß (20) seitlich entgegengesetzt von dem Block abstehen.

11. Ventilanordnung nach Anspruch 10, dadurch **gekennzeichnet,** daß alternativ oder zusätzlich ein Heizkörper-Vorlaufanschluß und ein Heizkörper-Rücklaufanschluß (24, 26) vorgesehen sind, die bevorzugt für einen Heizkörper mit mittigem Anschluß vorgesehen sind.

12. Ventilanordnung nach einem der Ansprüche 1 bis 11, dadurch **gekennzeichnet,** daß die Ventilanordnung (10) integrierte Ventilgehäuse bzw. Ventilaufnähmen (32, 38, 40, 46, 54) aufweist, in die anzuordnende Ventile eingesetzt werden können bzw. eingesetzt sind.

13. Ventilanordnung nach einem der Ansprüche 5 bis 12, dadurch **gekennzeichnet,** daß in den Block bzw. einer von dessen Hälften bzw. Abschnitten (10a, 10c) Ventilgehäuse eingeformt, eingegossen oder dergleichen sind, wobei auch Anbindungen zu den Verbindungsleitungen (28, 30, 50, 48) vorgesehen sind.
